# EUROPEAN PATENT SPECIFICATION

(11) **EP 3 027 779 B1**
(45) Date of publication and mention of the grant of the patent: **15.04.2020**
(21) Application number: 13890771.2
(22) Date of filing: 05.11.2013
(51) Int. Cl.: C21B 13/02, C01B 3/24, C21C 5/40, C21B 13/00, C01B 3/36

(54) **REDUCING IRON OXIDE TO METALLIC IRON USING NATURAL GAS**
REDUKTION VON EISENOXID ZU METALLISCHEM EISEN MIT ERDGAS
RÉDUCTION D'OXYDE DE FER EN FER MÉTALLIQUE FAISANT APPEL À DU GAZ NATUREL

(30) Priority: 31.07.2013 US 201313955654; 01.11.2013 US 201314069493
(43) Date of publication of application: 08.06.2016
(73) Proprietor: Midrex Technologies, Inc., Charlotte, North Carolina 28208 (US)
(72) Inventor: METIUS, Gary, E., Charlotte, NC 28270 (US); MCCLELLAND, James, M., Jr., Cornelius, NC 28031 (US); MEISSNER, David, C., Charlotte, NC 28270-0458 (US); MONTAGUE, Stephen, C., Midland, NC 28107 (US)
(74) Representative: dompatent von Kreisler Selting Werner - Partnerschaft von Patent- und Rechtsanwälten mbB
(86) International application number: PCT/US2013/068404
(87) International publication number: WO 2015/016956

(56) References cited:
- WO-A1-2012/158178
- US-A- 4 019 724
- US-A- 4 212 452
- US-A- 5 989 308
- US-A- 5 997 596
- US-A- 5 997 596
- US-A1- 2001 003 930
- US-A1- 2004 039 069
- US-A1- 2004 226 406
- US-A1- 2012 125 157
- US-A1- 2012 125 159
- US-B1- 6 692 661

## Description

The present invention relates generally to a novel method for reducing iron oxide to metallic iron using clean or raw (i.e. nearly well head) natural gas (NG). More specifically, the present invention utilizes a thermal reaction system (TRS) to reform the NG or the like with minimal processing or cleaning, such that a synthesis gas (syngas) suitable for direct reduction results.

Conventional reforming processes for the direct reduction (DR) of iron oxide to metallic iron utilize NG that has been processed or cleaned to remove impurities, such as hydrocarbons (gases and liquids), excess carbon dioxide (CO₂), sulfur (S), etc. Most reformers can handle some ethane (C₂H₆), propane (C₃H₈), butane (C₄H₁₀), and traces of C₅₊, but are primarily designed for reforming methane (CH₄) with a top gas, for example. S acts as a catalyst poison and can only be tolerated in low ppm quantities, in the range of 5 to 10 ppm.

WO 2012/158178 A1 discloses a process for the direct reduction of iron ore when the external source of reductants is one or both of coke oven gas (COG) and basic oxygen furnace gas (BOFG). Carbon dioxide is removed from a mixture of shaft: furnace off gas, obtained from a conventional direct reduction shaft: furnace, and BOFG. This CO₂ lean gas is mixed with clean COG, humidified, and heated in an indirect heater. Oxygen is injected into the heated reducing gas. This hot reducing gas flows to the direct reduction shaft furnace for use. The spent hot reducing gas exits the direct reduction shaft furnace as shaft furnace off gas, produces steam in a waste heat boiler, cleaned in a cooler scrubber, compressed, and recycled to join fresh BOFG. A portion of the shaft furnace off gas is sent to the heater burners.

US 2012/125157 A1 describes a method and apparatus for producing direct reduced iron (DRI), also known as sponge iron, by means of direct contact of iron oxides with a stream of recycled and regenerated hot reducing gases containing hydrogen and carbon monoxide. The disclosure provides a way for decreasing the uncontained emission of CO₂ to the atmosphere produced by combustion of carbon-bearing fuels in the reducing gas heater by substituting, at least partially, a gas stream mainly composed of hydrogen in lieu of the usual carbon-bearing fuels. The hydrogen fuel stream, depleted of CO₂ by means of a physical gas separation unit (which can be a PSA/VPSA type adsorption unit, a gas separation membrane unit or combination of PSA/VPSA unit and a gas separation membrane unit) is derived from at least a portion of a stream of regenerated reducing gases being recycled to the reduction reactor. The derived hydrogen fuel stream is combusted in the reducing gas heater and/or other thermal equipment in the reduction plant, thus decreasing the CO₂ emissions directly to the atmosphere.

Thus, what is still needed in the art are methods that replace the reformer with an alternative component that can convert clean or raw NG to reducing gas/syngas suitable for DR with minimal processing or cleaning. Hydrocarbons and the like would be converted to hydrogen (H₂) and carbon monoxide (CO). S would not affect the conversion to reducing gas/syngas, but would be removed or otherwise cleaned up by the iron bed in the DR shaft furnace.

In various exemplary embodiments, the present invention provides precisely this -methods that replace the reformer with an alternative component that can convert clean or raw NG to reducing gas/syngas suitable for DR with minimal processing or cleaning. Hydrocarbons and the like are converted to H₂ and CO. S does not affect the conversion to syngas, but is removed or otherwise cleaned up by the iron bed in the DR shaft furnace. It should be noted that, direct reduced iron (DRI) contaminated with high levels of S may not be suitable as electric arc furnace (EAF) feedstock, but may be suitable as metalized feedstock to a blast furnace, for example.

In one embodiment, the present invention provides a method for reducing iron oxide to metallic iron, comprising: providing a top gas stream from a direct reduction shaft furnace; removing carbon dioxide from the top gas stream using a carbon dioxide removal system; heating the top gas stream in a gas heater to form a reducing gas stream and providing the reducing gas stream to the direct reduction shaft furnace to reduce the iron oxide to the metallic iron; preheating a natural gas stream in a preheater; reacting the preheated natural gas stream in a thermal reaction system to form a synthesis gas stream, wherein the thermal reaction system comprises a hot oxygen burner and a nozzle that utilize oxygen and a fuel; and adding the synthesis gas stream to the reducing gas stream. The natural gas stream may comprise one or more of a hydrocarbon, hydrogen, carbon monoxide, carbon dioxide, and sulfur. The thermal reaction system comprises a hot oxygen burner and a nozzle that utilize oxygen and a fuel. The oxygen may be received from an air separation plant. The fuel may comprise a portion of the top gas stream.

The method still further may comprise providing a portion of the natural gas stream to the gas heater as fuel. The method still further may comprise firing the preheater with a portion of the top gas stream. The method still further may comprise providing a portion of the preheated natural gas stream to the direct reduction shaft furnace as one or more of bustle enrichment gas and transition zone gas. The method still further may comprise adding oxygen to the bustle gas. The method still further may comprise generating steam in a boiler using sensible heat of the top gas stream and utilizing the steam in the (absorption type) carbon dioxide removal system. The method still further may comprise providing a portion of the top gas stream to the gas heater as fuel.

In another embodiment, the present invention provides a method for reducing iron oxide to metallic iron, comprising: providing a top gas stream from a direct reduction shaft furnace; removing carbon dioxide from the top gas stream using a carbon dioxide removal system; preheating a natural gas stream in a preheater; reacting the preheated natural gas stream in a thermal reaction system to form a synthesis gas stream, wherein the thermal reaction system comprises a hot oxygen burner and a nozzle that utilize oxygen; removing moisture from one or more of the top gas stream and the synthesis gas stream using a saturator; heating the top gas stream in a gas heater to form a reducing gas stream and providing the reducing gas stream to the direct reduction shaft furnace to reduce the iron oxide to the metallic iron; and adding the synthesis gas stream to the top gas stream. The natural gas stream may comprise one or more of a hydrocarbon, hydrogen, carbon monoxide, carbon dioxide, and sulfur. The thermal reaction system comprises a hot oxygen burner and a nozzle that utilize oxygen and a fuel. The oxygen may be received from an air separation plant. The fuel may comprise a portion of the top gas stream. The method still further may comprise cooling the preheated and reacted natural gas stream in a boiler and the heat exchanger to form the synthesis gas stream. The method still further may comprise providing a portion of the natural gas stream to the gas heater as fuel. The heat exchanger may operate by cross-exchange of the synthesis gas stream with the synthesis gas stream. The method still further may comprise providing a portion of the preheated natural gas stream to the direct reduction shaft furnace as one or more of bustle enrichment gas and transition zone gas. The method still further may comprise generating steam in a first boiler using the top gas stream and utilizing the steam in the (absorption type) carbon dioxide removal system. The method still further may comprise generating steam in a second boiler using the preheated and reacted natural gas stream and utilizing the steam in the carbon dioxide removal system. The method still further may comprise providing a portion of the top gas stream to the gas heater as fuel. The method still further may comprise adding oxygen to the reducing gas stream.

In a further embodiment, the present invention provides a method for reducing iron oxide to metallic iron, comprising: providing a natural gas stream; preheating the natural gas stream in a heat exchanger; reacting the preheated natural gas stream in a thermal reaction system to form a reducing gas stream, wherein the thermal reaction system comprises a hot oxygen burner and a nozzle that utilize oxygen and a fuel; and providing the reducing gas stream to a direct reduction shaft furnace to reduce the iron oxide to the metallic iron. The natural gas stream may comprise one or more of a hydrocarbon, hydrogen, carbon monoxide, carbon dioxide, and sulfur. The thermal reaction system comprises a hot oxygen burner and a nozzle that utilize oxygen and a fuel. The oxygen may be received from an air separation plant. The fuel may comprise a portion of a top gas stream derived from the direct reduction shaft furnace that is cooled in the heat exchanger and cleaned in a scrubber. The natural gas stream may be preheated in the heat exchanger by cross-exchange with the top gas stream. The method also may comprise providing a portion of the preheated natural gas stream to the direct reduction shaft furnace as one or more of bustle enrichment gas and transition zone gas. The method further may comprise utilizing a remaining portion of the cooled/cleaned top gas stream in one or more of a power generation system and a steelmaking facility.

The present invention is illustrated and described herein with reference to the various drawings, in which like reference numbers are used to denote like system components/method steps, as appropriate, and in which:

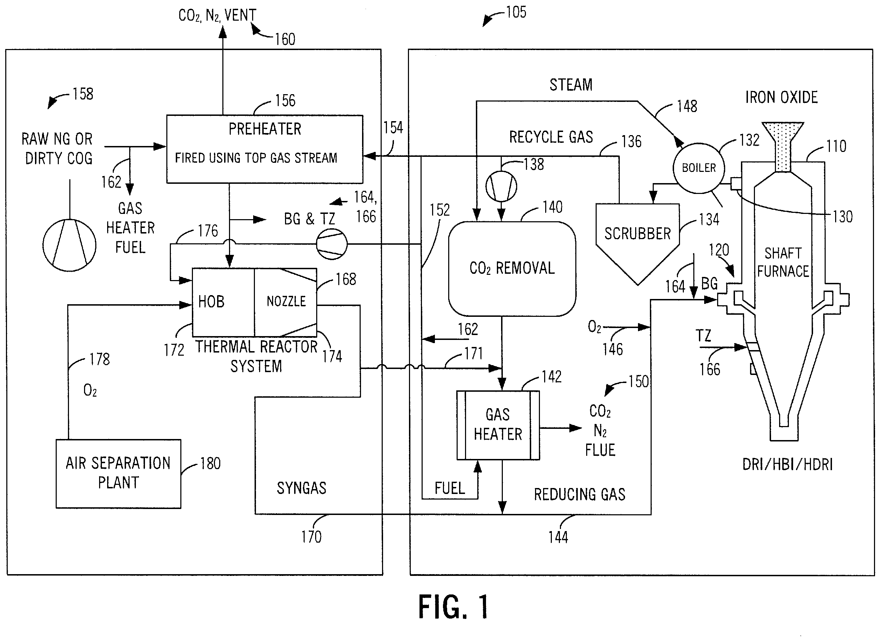

FIG. 1 is a schematic diagram illustrating one exemplary embodiment of the novel method for reducing iron oxide to metallic iron using clean or raw NG of the present invention - specifically, clean or raw NG is used in conjunction with a low-carbon (i.e. up to about 1-2%) DR plant, such as hot briquetted iron (HBI) plant or the like;

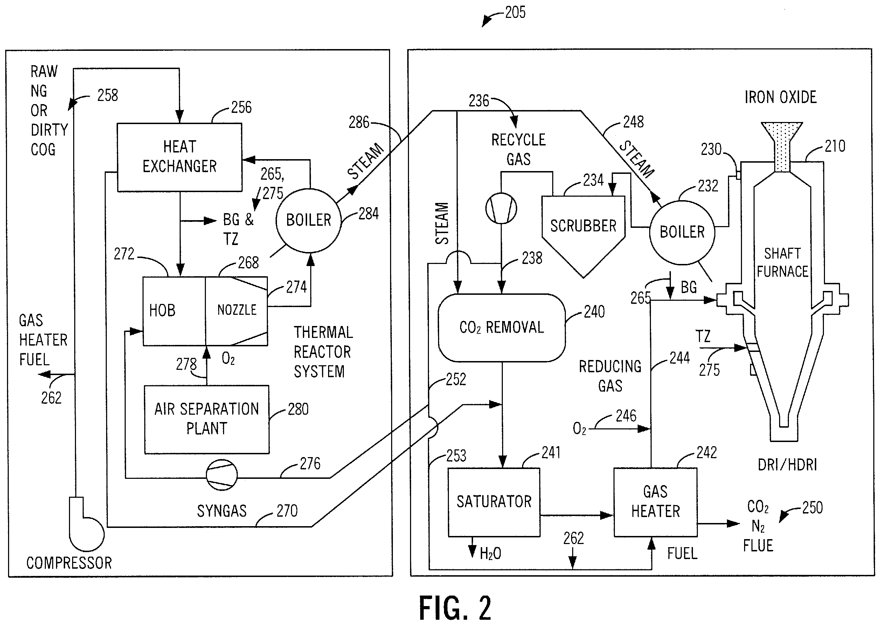

FIG. 2 is another schematic diagram illustrating an alternative exemplary embodiment of the novel method for reducing iron oxide to metallic iron using clean or raw NG of the present invention - specifically, clean or raw NG is used in conjunction with a high-carbon (i.e. greater than about 2%) DR plant or the like; and

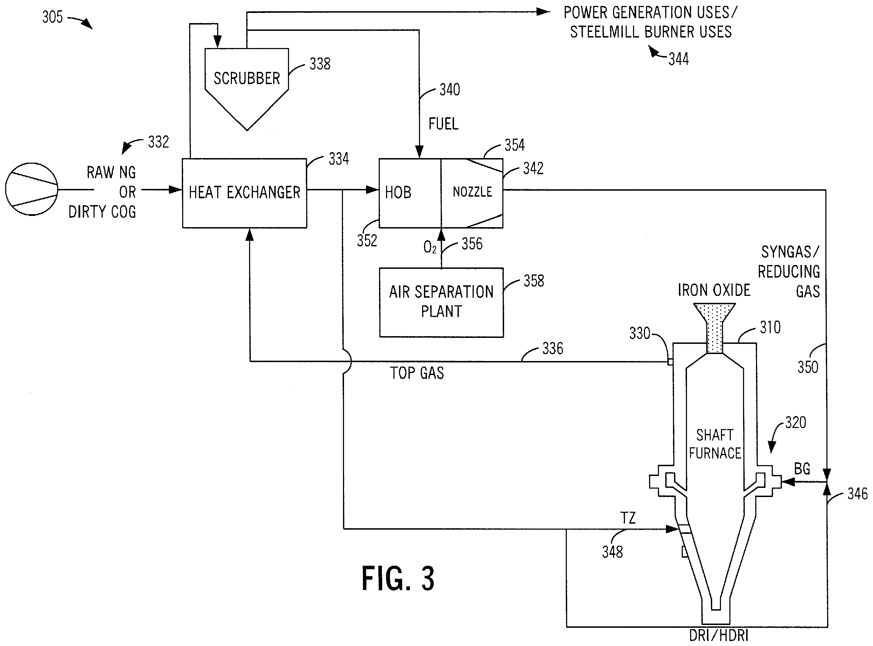

FIG. 3 is a schematic diagram illustrating one exemplary embodiment of a novel once-through (i.e. no recycle) method for reducing iron oxide to metallic iron using clean or raw NG of the present invention.

Referring now specifically to FIGS. 1-3, the methods of the present invention include and utilize individual components that are well known to those of ordinary skill in the art, and thus they are not illustrated or described in detail herein. These individual components are, however, variously combined to form an inventive whole. The individual components include, but are not limited to, a conventional DR shaft furnace, boilers, coolers/scrubbers, CO₂ removal systems, compressors, saturators, gas heaters, heat exchangers, gas sources (and/or appropriate gas storage vessels), and the like.

In general, the DR shaft furnace 110, 210, 310 has an upper portion where iron ore in the form of pellets, lumps, agglomerates, etc. is fed. The reduced pellets, lumps, agglomerates, etc. are removed at a lower portion of the DR shaft furnace 110, 210, 310 as DRI. A reducing gas/syngas inlet 120, 320 is located between the feed charge and the product discharge, and supplies hot reducing gas/syngas to the DR shaft furnace 110, 210, 310. This hot reducing gas/syngas contains CH₄, which, conventionally, is reformed near the gas inlet 120, 220, 320 of the DR shaft furnace 110, 210, 310 by CO₂ and water (H₂O) contained in the hot reducing gas/syngas to produce additional H₂, CO, and carbon (C). The hot direct reduced iron (HDRI) acts as a catalyst in the reforming reaction. Following this reforming reaction, the hot reducing gas/syngas containing H₂ and CO reduces the iron oxide to metallic iron and exits the DR shaft furnace 110, 210, 310 as spent reducing gas (or top gas) through an offtake pipe at the top portion of the DR shaft furnace. This top gas 130, 230, 330 may then be withdrawn and recycled for a variety of purposes.

As described above, in various exemplary embodiments, the present invention provides methods that replace the conventional reformer with an alternative component that can convert clean or raw NG to reducing gas/syngas suitable for DR with minimal processing or cleaning. Hydrocarbons and the like are converted to H₂ and CO. S does not affect the conversion to reducing gas/syngas, but is removed or otherwise cleaned up by the iron bed in the DR shaft furnace. Top gas may be continuously recycled or a once-through approach may be employed. Again, it should be noted that, DRI contaminated with high levels of S may not be suitable as EAF feedstock, but may be suitable as metalized feedstock to a blast furnace, for example. Referring now specifically to FIG. 1, in one exemplary embodiment of the present invention, methods 105 are provided for reducing iron oxide to metallic iron using clean or raw NG in a low-carbon (up to about 1-2%) DR plant, such as an HBI plant or the like. This exemplary embodiment uses clean or raw NG up to about 250 m³/t DRI. Recycled top gas 130 is removed from the DR shaft furnace 110 and fed to a boiler 132 and cooler/scrubber 134 for steam generation, water removal, cooling, and/or cleaning, resulting in a recycled top gas 136 saturated at a temperature of between about 30 degrees C and about 45 degrees C. This recycled top gas 136 is then split into multiple streams. The first stream 138 is fed to an absorption type CO₂ removal unit 140 or the like, which removes about 95% of the CO₂ and S (as H₂S) from this first stream 138, and a gas heater 142, which heats the first stream 138 to a temperature of between about 900 degrees C and about 1100 degrees C, thereby providing a reducing gas stream 144 that is fed into the DR shaft furnace 110. Oxygen (O₂) 146 may be added to the reducing gas stream 144, as necessary, prior to the reducing gas stream 144 being fed into the DR shaft furnace 110. Optionally, the CO₂ removal unit 140 is a membrane type CO₂ removal unit, a pressure swing adsorption (PSA) unit, a vacuum pressure swing adsorption (VPSA) unit, etc. Steam 148 from the boiler 132 may be used by the absorption type CO₂ removal unit 140 or for other uses, including power generation. CO₂ and nitrogen (N₂) are also removed via the gas heater flue 150, for example. The second stream 152 is used as gas heater fuel. The third stream 154 is used to fire a preheater 156. A supply of compressed clean or raw NG 158 is processed through the preheater 156, and preheated to a temperature of between about 300 degrees C and about 500 degrees C. Both CO₂ and N₂ 160 are vented, as necessary, through the preheater 156. Prior to preheating, a portion of the NG 158 may be used as gas heater fuel 162. Advantageously, post-preheating, a portion of the NG 158 may be provided to the DR shaft furnace 110 as bustle (enrichment) gas (BG) 164 and a portion of the NG 158 may be delivered to the DR shaft furnace 110 as transition zone (TZ) gas 166. The remainder of the NG 158 is processed by a TRS 168 to form a syngas stream 170 that is added to the previously mentioned reducing gas stream 144. A portion of the syngas stream 171 may be added to the inlet of the gas heater 142 to provide additional moisture, such that C buildup in the gas heater 142 is prevented. Preferably, the syngas stream 170 consists of at least about 82% H₂ and CO. In general, the TRS 168 includes a hot oxygen burner (HOB) 172 and a nozzle 174. Fuel 176 derived from the recycled top gas stream 136 is combined with O₂ 178 from an air separation plant 180 or the like in the HOB 168 and, at high temperature (i.e. 2,000-2,500 degrees C), is accelerated through the nozzle 174 and contacted with the NG 158 to form the syngas stream 170. The use of the NG 158 in the BG and the TZ gas allows for control of the carbon content of the resulting DRI, as well as the temperature of the bed in the DR shaft furnace 110.

Referring now specifically to FIG. 2, in another exemplary embodiment of the present invention, methods 205 are provided for reducing iron oxide to metallic iron using clean or raw NG in a high-carbon (greater than about 2%) DR plant or the like. Recycled top gas 230 is removed from the DR shaft furnace 210 and fed to a boiler 232 and cooler/scrubber 234 for steam generation, water removal, cooling, and/or cleaning, resulting in a recycled top gas 236 saturated at a temperature of between about 30 degrees C and about 45 degrees C. This recycled top gas 236 is then split into multiple streams. The first stream 238 is fed to an absorption type CO₂ removal unit 240 or the like, which removes about 95% of the CO₂ and S (as H₂S) from this first stream 238, a saturator 241, which removes H₂O from this first stream 238, and a gas heater 242, which heats the first stream 238 to a temperature of between about 900 degrees C and about 1100 degrees C, thereby providing a reducing gas stream 244 that is fed into the DR shaft furnace 210. O₂ 246 may be added to the reducing gas stream 244, as necessary, prior to the reducing gas stream 244 being fed into the DR shaft furnace 210. Optionally, the CO₂ removal unit 240 is a membrane type CO₂ removal unit, a PSA unit, a VPSA unit, etc. Steam 248 from the boiler 232 may be used by the absorption type CO₂ removal unit 240 or for other uses, including power generation. CO₂ and N₂ are also removed via the gas heater flue 250, for example. The second stream 253 is used as gas heater fuel. A supply of compressed clean or raw NG 258 is processed through a heat exchanger 256, and preheated to a temperature of between about 300 degrees C and about 500 degrees C. Optionally, the heat exchanger 256 operates by cross-exchange with a still heated syngas 270, as described in greater detail below. Prior to preheating, a portion of the NG 258 may be used as gas heater fuel 262. Again, a portion of the preheated NG 258 may be delivered to the DR shaft furnace 210 as BG 265 and a portion of the preheated NG 258 may be delivered to the DR shaft furnace 210 as TZ gas 275. Again, the remainder of the preheated NG 258 is processed by a TRS 268 to form the heated syngas 270. Preferably, the heated syngas 270 consists of at least about 82% H₂ and CO and is generated by the TRS 268 and a recycle loop including the TRS 268, a boiler 284 (which also generates steam 286 for use in the CO₂ removal unit 240), and the heat exchanger 256, which cools the preheated and reacted NG stream to form the syngas 270. In general, the TRS 268 includes an HOB 272 and a nozzle 274. Fuel 276 derived from the recycled top gas stream 252 is combined with O₂ 278 from an air separation plant 280 or the like in the HOB 272 and, at high temperature (i.e. 2,000-2,500 degrees C), is accelerated through the nozzle 274 and contacted with the preheated NG 258 to form the syngas stream 270. The syngas stream 270 is preferably combined with the reducing gas stream 244 between the CO₂ removal unit 240 and the saturator 241. However, in all exemplary embodiments, it should be noted that the syngas stream 270 (170 in FIG. 1), if it contains high levels of CO₂ and/or S, can be advantageously introduced upstream of the CO₂ removal unit 240 (140 in FIG. 1), to remove excess CO₂ and/or H₂S. Again, O₂ 246 may be added to the reducing gas stream 244 prior to injection into the DR shaft furnace 210. In this embodiment, given the higher carbon content involved, less H₂O is desirable in order to have the proper ratio of reducing gases to oxidizing gases. Thus, the approximately 1,200-degree C temperature leaving the TRS 268 is reduced to approximately 400-600 degrees C by the boiler 284, which is reduced to approximately 200 degrees C by the heat exchanger 256. The saturator 241 then takes the approximately 12%-H₂O syngas stream 270 and, when combined with the recycled top gas stream 238, reduces the moisture content to approximately 2-6%. Again, the use of the NG 258 in the BG and the TZ gas allows for control of the carbon content of the resulting DRI, as well as the temperature of the bed in the DR shaft furnace 210.

Referring now specifically to FIG. 3, in a further exemplary embodiment of the present invention, methods 305 are provided for reducing iron oxide to metallic iron using clean or raw NG on a once-through (i.e. no recycle) basis. This alternative exemplary embodiment allows clean or raw NG to be used to both produce metallic iron and generate power, as well as in a steelmaking facility, in applications where such multi-functionality desired. A supply of compressed NG 332 is processed through a heat exchanger 334, and heated to a temperature of between about 300 degrees C and about 500 degrees C. A spent top gas stream 336 is cooled and/or cleaned in the heat exchanger 334 and a scrubber 338 and the resulting gas stream may be used as fuel 340 for a TRS 342 or the like and/or for power generation/steelmill burners 344. Again, a portion of the heated NG 332 may be delivered to the DR shaft furnace 310 as BG enrichment 346 and a portion of the heated NG 332 may be delivered to the DR shaft furnace 310 as TZ gas 348. The remainder of the heated NG 332 is processed by the TRS 342 to form a syngas/reducing gas stream 350. Preferably, the syngas/reducing gas stream 350 consists of a reductant-to-oxidant ratio of about 5-to-6. In general, the TRS 342 includes an HOB 352 and a nozzle 354. Fuel 340 derived from the heat exchanger 334, for example, is combined with O₂ 356 from an air separation plant 358 or the like in the HOB 352 and, at high temperature (i.e. 2,000-2,500 degrees C), is accelerated through the nozzle 354 and contacted with the compressed heated NG 332 to form the syngas/reducing gas stream 350. Again, the use of the NG 332 in the BG and the TZ gas allows for control of the carbon content of the resulting DRI, as well as the temperature of the bed in the DR shaft furnace 310.

As described above, in various exemplary embodiments, the present invention provides methods that replace the conventional reformer with an alternative component that can convert clean or raw NG to reducing gas/syngas suitable for DR with minimal processing or cleaning. Hydrocarbons and the like are converted to H₂ and CO. S does not affect the conversion to reducing gas/syngas, but is removed or otherwise cleaned up by the iron bed in the DR shaft furnace. Top gas may be continuously recycled or a once-through approach may be employed. Again, it should be noted that, DRI contaminated with high levels of S may not be suitable as EAF feedstock, but may be suitable as metalized feedstock to a blast furnace, for example.

## Claims

1. A method for reducing iron oxide to metallic iron, comprising:
providing a top gas stream from a direct reduction shaft furnace (110, 210, 310);
removing carbon dioxide from the top gas stream using a carbon dioxide removal system (140, 240);
heating the top gas stream in a gas heater (142, 242) to form a reducing gas stream and providing the reducing gas stream to the direct reduction shaft furnace (110, 210, 310) to reduce the iron oxide to the metallic iron;
preheating a natural gas stream in a preheater (156);
reacting the preheated natural gas stream in a thermal reaction system (168, 268, 342) to form a synthesis gas stream, wherein the thermal reaction system (168, 268, 342) comprises a hot oxygen burner (172, 272, 352) and a nozzle (174, 274, 354) that utilize oxygen and a fuel; and
adding the synthesis gas stream to the reducing gas stream.

2. The method of claim 1, wherein the natural gas stream comprises one or more of a hydrocarbon, hydrogen, carbon monoxide, carbon dioxide, and sulfur.

3. The method of claim 1, wherein the oxygen is received from an air separation plant.

4. The method of claim 1, wherein the fuel comprises a portion of the top gas stream.

5. The method of claim 1, further comprising providing a portion of the natural gas stream to the gas heater (142, 242) as fuel.

6. The method of claim 1, further comprising firing the preheater (156) with a portion of the top gas stream.

7. The method of claim 1, further comprising providing a portion of the preheated natural gas stream to the direct reduction shaft furnace (110, 210, 310) as one or more of bustle enrichment gas and transition zone gas.

8. The method of claim 7, further comprising adding oxygen to the bustle enrichment gas.

9. The method of claim 1, further comprising generating steam in a boiler using sensible heat of the top gas stream and utilizing the steam in the carbon dioxide removal system (140, 240).

10. The method of claim 1, further comprising providing a portion of the top gas stream to the gas heater (142, 242) as fuel.

11. A method for reducing iron oxide to metallic iron, comprising:
providing a top gas stream from a direct reduction shaft furnace (110, 210, 310);
removing carbon dioxide from the top gas stream using a carbon dioxide removal system (140, 240);
preheating a natural gas stream in a preheater (156);
reacting the preheated natural gas stream in a thermal reaction system (168, 268, 342) to form a synthesis gas stream, wherein the thermal reaction system (168, 268, 342) comprises a hot oxygen burner (172, 272, 352) and a nozzle (174, 274, 354) that utilize oxygen and a fuel;
removing moisture from one or more of the top gas stream and the synthesis gas stream using a saturator (241);
heating the top gas stream in a gas heater (142, 242) to form a reducing gas stream and providing the reducing gas stream to the direct reduction shaft furnace (110, 210, 310) to reduce the iron oxide to the metallic iron; and
adding the synthesis gas stream to the top gas stream.

12. The method of claim 11, wherein the natural gas stream comprises one or more of a hydrocarbon, hydrogen, carbon monoxide, carbon dioxide, and sulfur.

13. The method of claim 11, wherein the oxygen is received from an air separation plant.

14. The method of claim 11, wherein the fuel comprises a portion of the top gas stream.

15. The method of claim 11, further comprising cooling the preheated and reacted natural gas stream in a boiler and the heat exchanger (256, 334) to form the synthesis gas stream.

16. The method of claim 11, further comprising providing a portion of the natural gas stream to the gas heater (142, 242) as fuel.

17. The method of claim 11, wherein the heat exchanger (256, 334) operates by cross-exchange with the synthesis gas stream.

18. The method of claim 11, further comprising providing a portion of the preheated natural gas stream to the direct reduction shaft (110, 210, 310) furnace as one or more of bustle enrichment gas and transition zone gas.

19. The method of claim 11, further comprising generating steam in a first boiler using the top gas stream and utilizing the steam in the carbon dioxide removal system (140, 240).

20. The method of claim 11, further comprising generating steam in a second boiler using the preheated and reacted natural gas stream and utilizing the steam in the carbon dioxide removal system (140, 240).

21. The method of claim 11, further comprising providing a portion of the top gas stream to the gas heater (142, 242) as fuel.

22. The method of claim 11, further comprising adding oxygen to the reducing gas stream.

23. A method for reducing iron oxide to metallic iron, comprising:
providing a natural gas stream;
preheating the natural gas stream in a heat exchanger (256, 334);
reacting the preheated natural gas stream in a thermal reaction system (168, 268, 342) to form a reducing gas stream, wherein the thermal reaction system (168, 268, 342) comprises a hot oxygen burner (172, 272, 352) and a nozzle (174, 274, 354) that utilize oxygen and a fuel; and
providing the reducing gas stream to a direct reduction shaft furnace (110, 210, 310) to reduce the iron oxide to the metallic iron.

24. The method of claim 23, wherein the natural gas stream comprises one or more of a hydrocarbon, hydrogen, carbon monoxide, carbon dioxide, and sulfur.

25. The method of claim 23, wherein the oxygen is received from an air separation plant.

26. The method of claim 23, wherein the fuel comprises a portion of a top gas stream derived from the direct reduction shaft furnace (110, 210, 310) that is cooled in the heat exchanger (256, 334) and cleaned in a scrubber.

27. The method of claim 26, wherein the natural gas stream is preheated in the heat exchanger (256, 334) by cross-exchange with the top gas stream.

28. The method of claim 23, further comprising providing a portion of the preheated natural gas stream to the direct reduction shaft furnace (110, 210, 310) as one or more of bustle enrichment gas and transition zone gas.

29. The method of claim 26, further comprising utilizing a remaining portion of the cooled/cleaned top gas stream in one or more of a power generation system and a steelmaking facility.

## Patentansprüche

1. Verfahren zum Reduzieren von Eisenoxid zu metallischem Eisen, umfassend:
Bereitstellen eines Gichtgasstroms aus einem Direktreduktionsschachtofen (110, 210, 310);
Entfernen von Kohlendioxid aus dem Gichtgasstrom mit Hilfe eines Kohlendioxidentfernungssystems (140, 240);
Erhitzen des Gichtgasstroms in einem Gaserhitzer (142, 242) unter Bildung eines reduzierenden Gasstroms und Bereitstellen des reduzierenden Gasstroms für den Direktreduktionsschachtofen (110, 210, 310) zum Reduzieren des Eisenoxids zu dem metallischen Eisen;
Vorerhitzen eines Erdgasstroms in einem Vorerhitzer (156);
Umsetzen des vorerhitzten Erdgasstroms in einem thermischen Reaktionssystem (168, 268, 342) unter Bildung eines Synthesegasstroms, wobei das thermische Reaktionssystem (168, 268, 342) einen heißen Sauerstoffbrenner (172, 272, 352) und eine Düse (174, 274, 354) umfasst, die Sauerstoff und einen Brennstoff nutzen; und
Hinzufügen des Synthesegasstroms zu dem reduzierenden Gasstrom.

2. Verfahren gemäß Anspruch 1, wobei der Erdgasstrom eines oder mehrere aus einem Kohlenwasserstoff, Wasserstoff, Kohlenmonoxid, Kohlendioxid und Schwefel umfasst.

3. Verfahren gemäß Anspruch 1, wobei der Sauerstoff aus einer Lufttrennungsanlage erhalten wird.

4. Verfahren gemäß Anspruch 1, wobei der Brennstoff einen Teil des Gichtgasstroms umfasst.

5. Verfahren gemäß Anspruch 1, weiterhin umfassend das Bereitstellen eines Teils des Erdgasstroms für den Gaserhitzer (142, 242) als Brennstoff.

6. Verfahren gemäß Anspruch 1, weiterhin umfassend das Befeuern des Vorerhitzers (156) mit einem Teil des Gichtgasstroms.

7. Verfahren gemäß Anspruch 1, weiterhin umfassend das Bereitstellen eines Teils des vorerhitzten Erdgasstroms für den Direktreduktionsschachtofen (110, 210, 310) als Betriebsanreicherungsgas und/oder Übergangszonengas.

8. Verfahren gemäß Anspruch 7, weiterhin umfassend das Hinzufügen von Sauerstoff zu dem Betriebsanreicherungsgas.

9. Verfahren gemäß Anspruch 1, weiterhin umfassend das Erzeugen von Dampf in einem Kessel unter Verwendung von fühlbarer Wärme des Gichtgasstroms und das Verwenden des Dampfs in dem Kohlendioxidentfernungssystem (140, 240).

10. Verfahren gemäß Anspruch 1, weiterhin umfassend das Bereitstellen eines Teils des Gichtgasstroms für den Gaserhitzer (142, 242) als Brennstoff.

11. Verfahren zum Reduzieren von Eisenoxid zu metallischem Eisen, umfassend:
Bereitstellen eines Gichtgasstroms aus einem Direktreduktionsschachtofen (110, 210, 310);
Entfernen von Kohlendioxid aus dem Gichtgasstrom mit Hilfe eines Kohlendioxidentfernungssystems (140, 240);
Vorerhitzen eines Erdgasstroms in einem Vorerhitzer (156);
Umsetzen des vorerhitzten Erdgasstroms in einem thermischen Reaktionssystem (168, 268, 342) unter Bildung eines Synthesegasstroms, wobei das thermische Reaktionssystem (168, 268, 342) einen heißen Sauerstoffbrenner (172, 272, 352) und eine Düse (174, 274, 354) umfasst, die Sauerstoff und einen Brennstoff nutzen;
Entfernen von Feuchtigkeit aus dem Gichtgasstrom und/oder dem Synthesegasstrom unter Verwendung eines Sättigers (241);
Erhitzen des Gichtgasstroms in einem Gaserhitzer (142, 242) unter Bildung eines reduzierenden Gasstroms und Bereitstellen des reduzierenden Gasstroms für den Direktreduktionsschachtofen (110, 210, 310) zum Reduzieren des Eisenoxids zu dem metallischen Eisen; und
Hinzufügen des Synthesegasstroms zu dem Gichtgasstrom.

12. Verfahren gemäß Anspruch 11, wobei der Erdgasstrom eines oder mehrere aus einem Kohlenwasserstoff, Wasserstoff, Kohlenmonoxid, Kohlendioxid und Schwefel umfasst.

13. Verfahren gemäß Anspruch 11, wobei der Sauerstoff aus einer Lufttrennungsanlage erhalten wird.

14. Verfahren gemäß Anspruch 11, wobei der Brennstoff einen Teil des Gichtgasstroms umfasst.

15. Verfahren gemäß Anspruch 11, weiterhin umfassend das Abkühlen des vorerhitzten und umgesetzten Erdgasstroms in einem Kessel und dem Wärmetauscher (256, 334) unter Bildung des Synthesegasstroms.

16. Verfahren gemäß Anspruch 11, weiterhin umfassend das Bereitstellen eines Teils des Erdgasstroms für den Gaserhitzer (142, 242) als Brennstoff.

17. Verfahren gemäß Anspruch 11, wobei der Wärmetauscher (256, 334) durch Austausch mit dem Synthesegasstrom arbeitet.

18. Verfahren gemäß Anspruch 11, weiterhin umfassend das Bereitstellen eines Teils des vorerhitzten Erdgasstroms für den Direktreduktionsschachtofen (110, 210, 310) als Betriebsanreicherungsgas und/oder Übergangszonengas.

19. Verfahren gemäß Anspruch 11, weiterhin umfassend das Erzeugen von Dampf in einem ersten Kessel unter Verwendung des Gichtgasstroms und das Verwenden des Dampfs in dem Kohlendioxidentfernungssystem (140, 240).

20. Verfahren gemäß Anspruch 11, weiterhin umfassend das Erzeugen von Dampf in einem zweiten Kessel unter Verwendung des vorerhitzten und umgesetzten Erdgasstroms und das Verwenden des Dampfs in dem Kohlendioxidentfernungssystem (140, 240).

21. Verfahren gemäß Anspruch 11, weiterhin umfassend das Bereitstellen eines Teils des Gichtgasstroms für den Gaserhitzer (142, 242) als Brennstoff.

22. Verfahren gemäß Anspruch 11, weiterhin umfassend das Hinzufügen von Sauerstoff zu dem reduzierenden Gasstrom.

23. Verfahren zum Reduzieren von Eisenoxid zu metallischem Eisen, umfassend:
Bereitstellen eines Erdgasstroms;
Vorerhitzen des Erdgasstroms in einem Wärmetauscher (256, 334);
Umsetzen des vorerhitzten Erdgasstroms in einem thermischen Reaktionssystem (168, 268, 342) unter Bildung eines reduzierenden Gasstroms, wobei das thermische Reaktionssystem (168, 268, 342) einen heißen Sauerstoffbrenner (172, 272, 352) und eine Düse (174, 274, 354) umfasst, die Sauerstoff und einen Brennstoff nutzen; und
Bereitstellen des reduzierenden Gasstroms für einen Direktreduktionsschachtofen (110, 210, 310) zum Reduzieren des Eisenoxids zu dem metallischen Eisen.

24. Verfahren gemäß Anspruch 23, wobei der Erdgasstrom eines oder mehrere aus einem Kohlenwasserstoff, Wasserstoff, Kohlenmonoxid, Kohlendioxid und Schwefel umfasst.

25. Verfahren gemäß Anspruch 23, wobei der Sauerstoff aus einer Lufttrennungsanlage erhalten wird.

26. Verfahren gemäß Anspruch 23, wobei der Brennstoff einen Teil eines aus dem Direktreduktionsschachtofen (110, 210, 310) stammenden Gichtgasstroms umfasst, der in dem Wärmetauscher (256, 334) gekühlt und in einem Gaswäscher gereinigt wird.

27. Verfahren gemäß Anspruch 26, wobei der Erdgasstrom in dem Wärmetauscher (256, 334) durch Austausch mit dem Gichtgasstrom vorerhitzt wird.

28. Verfahren gemäß Anspruch 23, weiterhin umfassend das Bereitstellen eines Teils des vorerhitzten Erdgasstroms für den Direktreduktionsschachtofen (110, 210, 310) als Betriebsanreicherungsgas und/oder Übergangszonengas.

29. Verfahren gemäß Anspruch 26, weiterhin umfassend das Nutzen des restlichen Teils des gekühlten/gereinigten Gichtgasstroms in einem Stromerzeugungssystem und/oder einer Stahlfabrik.

## Revendications

1. Procédé pour réduire de l'oxyde de fer en fer métallique, comprenant les étapes consistant à :
procurer un flux de gaz de haut-fourneau provenant d'un four à réduction directe à cuve (110, 210, 310),
éliminer du dioxyde de carbone du flux de gaz de haut-fourneau en utilisant un système d'élimination de dioxyde de carbone (140, 240),
chauffer le flux de gaz de haut-fourneau dans un réchauffeur de gaz (142, 242) pour former un flux de gaz réduisant et procurer le flux de gaz réduisant pour le four à réduction directe à cuve (110, 210, 310) pour réduire l'oxyde de fer en fer métallique,
préchauffer un flux de gaz naturel dans un préchauffeur (156),
faire réagir le flux de gaz naturel préchauffé dans un système de réaction thermique (168, 268, 342) pour former un flux de gaz de synthèse, dans lequel le système de réaction thermique (168, 268, 342) comprend un brûleur chaud à oxygène (172, 272, 352) et une buse (174, 274, 354) qui utilisent de l'oxygène et un carburant, et
ajouter le flux de gaz de synthèse au flux de gaz réduisant.

2. Procédé selon la revendication 1, dans lequel ledit flux de gaz naturel comprend un ou plusieurs parmi un hydrocarbure, de l'hydrogène, du monoxyde de carbone, du dioxyde de carbone et du soufre.

3. Procédé selon la revendication 1, dans lequel l'oxygène est obtenu d'une installation de séparation d'air.

4. Procédé selon la revendication 1, dans lequel le carburant comprend une partie du flux de gaz de haut-fourneau.

5. Procédé selon la revendication 1, comprenant en outre l'étape consistant à procurer une partie du flux de gaz naturel pour le réchauffeur de gaz (142, 242) comme carburant.

6. Procédé selon la revendication 1, comprenant en outre l'étape consistant à allumer le préchauffeur (156) avec une partie du flux de gaz de haut-fourneau.

7. Procédé selon la revendication 1, comprenant en outre l'étape consistant à procurer une partie du flux de gaz naturel préchauffé pour le four à réduction directe à cuve (110, 210, 310) comme gaz d'usine d'enrichissement et/ou comme gaz de zone de transition.

8. Procédé selon la revendication 7, comprenant en outre l'addition d'oxygène au gaz d'usine d'enrichissement.

9. Procédé selon la revendication 1, comprenant en outre l'étape consistant à générer de la vapeur dans une chaudière en utilisant de la chaleur sensible du flux de gaz de haut-fourneau et utiliser la vapeur dans le système d'élimination de dioxyde de carbone (140, 240).

10. Procédé selon la revendication 1, comprenant en outre l'étape consistant à procurer une partie du flux de gaz de haut-fourneau pour le réchauffeur de gaz (142, 242) comme carburant.

11. Procédé pour réduire de l'oxyde de fer en fer métallique, comprenant les étapes consistant à :
procurer un flux de gaz de haut-fourneau provenant d'un four à réduction directe à cuve (110, 210, 310),
éliminer du dioxyde de carbone du flux de gaz de haut-fourneau en utilisant un système d'élimination de dioxyde de carbone (140, 240),
préchauffer un flux de gaz naturel dans un préchauffeur (156), faire réagir le flux de gaz naturel préchauffé dans un système de réaction thermique (168, 268, 342) pour former un flux de gaz de synthèse, dans lequel le système de réaction thermique (168, 268, 342) comprend un brûleur chaud à oxygène (172, 272, 352) et une buse (174, 274, 354) qui utilisent de l'oxygène et un carburant,
enlever l'humidité du flux de gaz de haut-fourneau et/ou du flux de gaz de synthèse en utilisant un saturateur (241),
chauffer le flux de gaz de haut-fourneau dans un réchauffeur de gaz (142, 242) pour former un flux de gaz réduisant et procurer le flux de gaz réduisant pour le four à réduction directe à cuve (110, 210, 310) pour réduire l'oxyde de fer en fer métallique, et
ajouter le flux de gaz de synthèse au flux de gaz de haut-fourneau.

12. Procédé selon la revendication 11, dans lequel ledit flux de gaz naturel comprend un ou plusieurs parmi un hydrocarbure, de l'hydrogène, du monoxyde de carbone, du dioxyde de carbone et du soufre.

13. Procédé selon la revendication 11, dans lequel l'oxygène est obtenu d'une installation de séparation d'air.

14. Procédé selon la revendication 11, dans lequel le carburant comprend une partie du flux de gaz de haut-fourneau.

15. Procédé selon la revendication 11, comprenant en outre l'étape consistant à faire refroidir le flux de gaz naturel préchauffé et ayant réagit dans une chaudière et l'échangeur de chaleur (256, 334) pour former le flux de gaz de synthèse.

16. Procédé selon la revendication 11, comprenant en outre l'étape consistant à procurer une partie du flux de gaz naturel pour le réchauffeur de gaz (142, 242) comme carburant.

17. Procédé selon la revendication 11, dans lequel ledit échangeur de chaleur (256, 334) fonctionne par échange avec le flux de gaz de synthèse.

18. Procédé selon la revendication 11, comprenant en outre l'étape consistant à procurer une partie du flux de gaz naturel préchauffé pour le four à réduction directe à cuve (110, 210, 310) comme gaz d'usine d'enrichissement et/ou comme gaz de zone de transition.

19. Procédé selon la revendication 11, comprenant en outre l'étape consistant à générer de la vapeur dans une première chaudière en utilisant le flux de gaz de haut-fourneau et en utilisant la vapeur dans le système d'élimination de dioxyde de carbone (140, 240).

20. Procédé selon la revendication 11, comprenant en outre l'étape consistant à générer de la vapeur dans une deuxième chaudière en utilisant le flux de gaz naturel préchauffé et ayant réagit et en utilisant la vapeur dans le système d'élimination de dioxyde de carbone (140, 240).

21. Procédé selon la revendication 11, comprenant en outre l'étape consistant à procurer une partie du flux de gaz de haut-fourneau pour le réchauffeur de gaz (142, 242) comme carburant.

22. Procédé selon la revendication 11, comprenant en outre l'addition d'oxygène au flux de gaz réduisant.

23. Procédé pour réduire de l'oxyde de fer en fer métallique, comprenant les étapes consistant à :
procurer un flux de gaz naturel,
préchauffer le flux de gaz naturel dans un échangeur de chaleur (256, 334),
faire réagir le flux de gaz naturel préchauffé dans un système de réaction thermique (168, 268, 342) pour former un flux de gaz réduisant, dans lequel le système de réaction thermique (168, 268, 342) comprend un brûleur chaud à oxygène (172, 272, 352) et une buse (174, 274, 354) qui utilisent de l'oxygène et un carburant, et
procurer le flux de gaz réduisant pour le four à réduction directe à cuve (110, 210, 310) pour réduire l'oxyde de fer en fer métallique.

24. Procédé selon la revendication 23, dans lequel ledit flux de gaz naturel comprend un ou plusieurs parmi un hydrocarbure, de l'hydrogène, du monoxyde de carbone, du dioxyde de carbone et du soufre.

25. Procédé selon la revendication 23, dans lequel l'oxygène est obtenu d'une installation de séparation d'air.

26. Procédé selon la revendication 23, dans lequel le carburant comprend une partie du flux de gaz de haut-fourneau dérivé du four à réduction directe à cuve (110, 210, 310) qui est faite refroidir dans ledit échangeur de chaleur (256, 334) et nettoyé dans un épurateur.

27. Procédé selon la revendication 26, dans lequel le flux de gaz naturel est préchauffée dans l'échangeur de chaleur (256, 334) par échange avec le flux de gaz de haut-fourneau.

28. Procédé selon la revendication 23, comprenant en outre l'étape consistant à procurer une partie du flux de gaz naturel préchauffé pour le four à réduction directe à cuve (110, 210, 310) comme gaz d'usine d'enrichissement et/ou comme gaz de zone de transition.

29. Procédé selon la revendication 26, comprenant en outre l'utilisation de la partie restante du flux de gaz de haut-fourneau refroidi/nettoyé dans un système de production d'électricité et/ou dans une installation de fabrication d'acier.
